# EUROPÄISCHE PATENTSCHRIFT

(11) **EP 3 549 417 B1**
(45) Veröffentlichungstag und Bekanntmachung des Hinweises auf die Patenterteilung: **13.10.2021**
(21) Anmeldenummer: 19155639.8
(22) Anmeldetag: 06.02.2019
(51) Int. Cl.: A01B 59/06, A01B 59/00

(54) **LENKERANORDNUNG FÜR EINEN DREIPUNKT-KRAFTHEBER EINES TRAKTORS ODER EINER SONSTIGEN LANDWIRTSCHAFTLICHEN ARBEITSMASCHINE SOWIE DREIPUNKT-KRAFTHEBER**
LIFT ARM ASSEMBLY FOR A THREE POINT HYDRAULIC POWER LIFT OF A TRACTOR OR ANOTHER AGRICULTURAL MACHINE AND THREE POINT HYDRAULIC POWER LIFT
ENSEMBLE DE BRAS DE LEVAGE POUR UN RELEVAGE HYDRAULIQUE TROIS POINTS D'UN TRACTEUR OU D'UN AUTRE ENGIN DE TRAVAIL AGRICOLE AINSI QUE RELEVAGE HYDRAULIQUE TROIS POINTS

(30) Priorität: 05.04.2018 DE 102018108079
(43) Veröffentlichungstag der Anmeldung: 09.10.2019
(73) Patentinhaber: CLAAS Tractor S.A.S., 78141 Vélizy-Villacoublay Cedex (FR)
(72) Erfinder: Hautefeuille, Nicolas, 91140 Villebon Sur Yvette (FR); Louvel, Arnaud, 78220 Viroflay (FR)
(74) Vertreter: CLAAS Gruppe

(56) Entgegenhaltungen:
- EP-A1- 0 065 081
- EP-A1- 2 130 420
- EP-A1- 2 671 440

## Beschreibung

Die Erfindung betrifft eine Lenkeranordnung für einen Dreipunkt-Kraftheber eines Traktors oder einer sonstigen landwirtschaftlichen Arbeitsmaschine, umfassend einen Lenker und ein Hubelement, wie beispielsweise eine Hubstange. Die Erfindung betrifft ferner einen Dreipunkt-Kraftheber mit einer solchen Lenkeranordnung.

Dreipunkt-Kraftheber sind üblicherweise hydraulische Hubvorrichtungen, welche beispielsweise bei Traktoren vorgesehen sind und zum Ankuppeln und/oder Anheben von Anbaugeräten dienen. Die Dreipunkt-Kraftheber umfassen für gewöhnlich zwei bodennah angeordnete Lenker, die sogenannten Unterlenker, deren freien Enden die beiden unteren Punkte einer Dreipunktaufhängung bilden. An den freien Enden sind üblicherweise Fanghaken vorgesehen, um daran das Anbaugerät anhängen zu können. Die Unterlenker sind direkt oder über ein Hebelsystem mit einem Hydraulikzylinder gekoppelt und können darüber angehoben werden, beispielsweise um das dort angehängte Anbaugerät in eine vorgegebene Arbeitshöhe oder Arbeitsposition zu bringen.

Der Dreipunkt-Kraftheber bleibt üblicherweise an dem Traktor montiert, auch wenn er gerade nicht genutzt wird. Dadurch können Situationen entstehen, in denen die Unterlenker des Dreipunkt-Krafthebers hinderlich sind. Sofern beispielsweise ein Anhänger an der Anhängerkupplung des Traktors anhängt, kann es sein, dass bei einer Kurvenfahrt es zu einer Kollision der Deichsel des Anhängers mit den Unterlenkern kommt.

Aus der EP 2 671 440 A1 ist es deshalb bekannt, die Unterlenker in eine angehobene Position bringen zu können und in der angehobenen Position fixieren zu können. Auf diese Weise lassen sich die Unterlenker aus einem möglichen Kollisionsbereich herausbringen und/oder heraushalten. Dies wird erreicht, indem die Unterlenker relativ gegenüber den daran angelenkten Hubstangen des Hebelsystems angehoben werden können, ohne die Hubstangen selbst in ihrer Länge zu verändern. Dazu sind die Unterlenker jeweils über ein in einem Langloch geführtes Bolzenelement mit der jeweils zugehörigen Hubstange verbunden. Die Unterlenker befinden sich beispielsweise dann in der angehobenen Position, wenn das Bolzenelement am oberen längsseitigen Ende des Langloches vorliegt.

Um die Unterlenker in der angehobenen Position zu halten, ist es vorgesehen, dass das Bolzenelement relativ gegenüber dem Langloch in der angehobenen Position fixiert werden kann. Dazu ist an dem Bolzenelement ein rechteckiges Abschlusselement vorgesehen, welches mit einem Längsrand an obere Ränder von zwei in der Berandung des Langloches ausgebildeten Rippen in Anlage gebracht werden kann, um die Fixierung zu erreichen. Die Rippen erstrecken sich mit ihrer Längserstreckung in Längsrichtung des Langloches und dazwischen ist das Langloch angeordnet.

Es ist eine Aufgabe der Erfindung, wenigstens eine alternative Möglichkeit vorzuschlagen, um bei einer Lenkeranordnung mit den eingangs genannten Merkmalen den Lenker relativ gegenüber dem Hubelement in einer vorgegebenen Position, wie beispielsweise einer Transportposition und/oder einer angehobenen Position, festsetzen zu können. Ferner soll ein entsprechender Dreipunkt-Kraftheber vorgeschlagen werden.

Zur Lösung der Aufgabe wird eine Lenkeranordnung vorgeschlagen, welche die Merkmale des Anspruches 1 aufweist. Ferner werden zur Lösung der Aufgabe ein Dreipunkt-Kraftheber mit den Merkmalen des Anspruches 12 und ein Traktor oder eine sonstige landwirtschaftliche Arbeitsmaschine mit den Merkmalen des Anspruches 14 vorgeschlagen. Vorteilhafte Ausführungsformen und/oder Ausgestaltungen und/oder Aspekte der Erfindung ergeben sich den Unteransprüchen, der nachfolgenden Beschreibung und den Figuren.

Eine grundlegende Lenkeranordnung, beispielsweise für einen Dreipunkt-Kraftheber eines Traktors oder einer sonstigen landwirtschaftlichen Arbeitsmaschine, umfasst einen Lenker und ein Hubelement, insbesondere ein längliches Hubelement, wie beispielsweise eine Hubstange oder einen Hubarm oder einen Hubzylinder. Der Lenker ist mit dem Hubelement verbunden. Dies ist beispielsweise über ein in einem Langloch geführtes Bolzenelement realisiert, wobei beispielsweise das Bolzenelement in dem Langloch entlang eines Verschiebeweges geführt ist, so dass also das Bolzenelement in dem Langloch über den Verschiebeweg bewegt werden kann.

Bei der Lenkeranordnung ist ein Verriegelungselement vorgesehen, welches eingerichtet ist, von einer Verriegelungsposition in eine Entriegelungsposition gebracht zu werden, wobei in der Verriegelungsposition das Verriegelungselement in den Verschiebeweg eingreift und einen Anschlag für das Bolzenelement bildet, um das Bolzenelement in einem Bereich eines der zwei längsseitigen Enden des Langloches gegen ein Bewegen in Richtung zu dem anderen längsseitigen Ende des Langloches zu sichern. Dadurch ist eine Maßnahme ergriffen, um das Bolzenelement in dem Bereich des einen längsseitigen Endes des Langloches festsetzen zu können und damit gegen unbeabsichtigtes Lösen zu sichern, wenn sich das Bolzenelement dort befindet. Durch das Verriegelungselement ist dazu ein separates Bauteil genutzt, welches in der Verriegelungsposition eine mechanische Verriegelungsfunktion ausübt, indem es in den Verschiebeweg des Bolzenelementes eingreift und damit den Weg versperrt. Sofern das Bolzenelement sich in dem Bereich des einen längsseitigen Endes des Langloches befindet, ist es durch das in der Verrieglungsposition befindliche Verriegelungselement gehindert, sich aus diesem Bereich herauszubewegen.

Um das Bolzenelement in den Bereich des einen längsseitigen Endes des Langloches zu verschieben oder daraus heraus zu bewegen, ist das Verriegelungselement insbesondere eingerichtet, in der Entriegelungsposition den Verschiebeweg freizugeben. Grundsätzlich kann in der Entriegelungsposition das Bolzenelement in dem Langloch frei beweglich sein.

Es bietet sich an, dass das Verriegelungselement eingerichtet ist, in der Verriegelungsposition einen weiteren Anschlag zu bilden, welcher in einem Abstand zu dem anderen längsseitigen Ende des Langloches vorliegt, um das Bolzenelement zwischen dem weiteren Anschlag und dem anderen längsseitigen Ende des Langloches schwimmend zu lagern. Dadurch kommt dem Verriegelungselement in der Verriegelungsposition eine Trennfunktion zu. Denn in der Verriegelungsposition trennt das Verriegelungselement das Langloch in zwei Bereiche, welche in Längsrichtung des Langloches einerseits jeweils durch eines der längsseitigen Enden des Langloches und andererseits jeweils durch das Verriegelungselement begrenzt sind. Beispielsweise ist derjenige Bereich, der die schwimmende Lagerung des Bolzenelementes ermöglicht, derart bemessen, dass darin das Bolzenelement über eine gewisse Wegstrecke in Längsrichtung des Langloches bewegt werden kann, also "schwimmen" kann. Durch diesen Bewegungsbereich für das Bolzenelement kann eine Betriebsposition definiert sein, welche der Lenker relativ gegenüber dem Hubelement einnehmen kann, wenn beispielsweise die Lenkeranordnung als Bestandteil eines Dreipunkt-Krafthebers an einem Traktor vorliegt.

Gegenüber dem Bereich für die schwimmende Lagerung des Bolzenelementes ist in Längsrichtung des Langloches beabstandet derjenige Bereich vorgesehen, in dem mittels des Verriegelungselementes die Festsetzung des Bolzenelementes gegenüber dem einen längsseitigen Ende des Langloches ermöglicht ist. Durch diesen Bereich für das Bolzenelement kann eine Transportposition definiert sein, welche der Lenker relativ gegenüber dem Hubelement einnehmen kann, wenn beispielsweise die Lenkeranordnung als Bestandteil eines Dreipunkt-Krafthebers an einem Traktor vorliegt und beispielsweise eine angehobene Position des Lenkers erreicht werden soll.

Das Verriegelungselement ist um eine Drehachse schwenkbar gelagert und ist eingerichtet, durch eine Schwenkbewegung um die Drehachse in die Verriegelungsposition oder die Entriegelungsposition gebracht zu werden. Grundsätzlich kann das Verriegelungselement auch verschiebbar gelagert sein. Auch ist es möglich, dass das Verriegelungselement verschiebbar und schwenkbar gelagert ist, so dass es eine kombinierte Bewegung aus Verschiebung und Rotation ausführen kann, um in die Verriegelungsposition oder die Entriegelungsposition gebracht zu werden.

Dazu ist das Verriegelungselement hakenförmig und/oder u-förmig ausgebildet. Beispielsweise weist das hakenförmige und/oder u-förmige Verriegelungselement einen ersten Schenkel und einen zweiten Schenkel auf. Beispielsweise umfasst der erste Schenkel eine Drehstelle, über welche das Verriegelungselement um die Drehachse schwenkbar gelagert ist. Beispielsweise bildet der zweite Schenkel den Anschlag für das Bolzenelement. Beispielsweise befindet sich die Drehstelle an einem oberen Ende oder Endbereich des Verriegelungselementes. Durch diese Maßnahmen ist es begünstigt, dass das Verriegelungselement alleine durch Wirkung der Schwerkraft oder unterstützt durch die Schwerkraft in die Verriegelungsposition schwenkt. Auch kann es vorgesehen sein, dass das

Verriegelungselement ein Griffteil umfasst, um daran das Verriegelungselement in die Verriegelungsposition oder die Entriegelungsposition zu bringen, insbesondere händisch zu bringen.

Weiterhin kann es vorgesehen sein, dass der erste Schenkel über die Drehstelle an einer Vorderseite eines das Langloch aufweisenden Materialabschnittes befestigt ist und der zweite Schenkel gegenüber dem ersten Schenkel in Richtung der Drehachse versetzt angeordnet ist, so dass in der Verriegelungsposition der zweite Schenkel entlang einer Rückseite des Materialabschnittes vorliegt, und eine zwischen der Vorderseite und der Rückseite vorgesehene Stirnseite des Materialabschnittes als Begrenzungsfläche dient, gegen welche das Verriegelungselement mit einem zwischen dem ersten Schenkel und dem zweiten Schenkel angeordneten Zwischenabschnitt in Kontakt tritt, um die Schwenkbewegung des Verriegelungselementes zu begrenzen. Dadurch ist eine Maßnahme vorgeschlagen, durch welche die Schwenkbewegung des Verriegelungselementes begrenzt wird, um ein Bewegen des Verriegelungselementes über die Verriegelungsposition hinaus zu vermeiden. Wenn beispielsweise die Schwenkbewegung durch Kontakt der Begrenzungsfläche mit dem Zwischenabschnitt beendet ist, liegt das Verriegelungselement in der Verriegelungsposition vor. Bei einer selbsttätigen Schwenkung des Verriegelungselementes, beispielsweise aufgrund Nutzung von Schwerkraft, kann auf diese Weise sichergestellt werden, dass das Verriegelungselementes auch tatsächlich die angestrebte Verriegelungsposition einnimmt.

Nach einer Ausführungsform ist es vorgesehen, dass das Langloch dem Hubelement und das Bolzenelement dem Lenker zugeordnet sind, insbesondere das Langloch an dem Hubelement und das Bolzenelement an dem Lenker angeordnet sind. Es ist insbesondere ferner vorgesehen, dass das Verriegelungselement an dem Hubelement gelagert ist, insbesondere beweglich gelagert ist. Auch kann es vorgesehen sein, dass das Hubelement an einem Ende einen Gabelkopf mit zwei zueinander beabstandeten seitlichen Gabelschenkeln aufweist, zwischen denen der Lenker aufgenommen ist, wobei an dem jeweiligen Gabelschenkel das Langloch ausgebildet ist und das Bolzenelement die Gabelschenkel und den Lenker durchgreift.

Nach einer weiteren Ausführungsform ist das Bolzenelement, beispielsweise endseitig oder im Bereich wenigstens eines seiner Enden, mit einer Führungsplatte versehen und an der Berandung des Langloches ist entlang seiner jeweiligen Längsseite jeweils ein Steg vorgesehen, um daran bei einer Bewegung des Bolzenelementes entlang des Langlochs die Führungsplatte zu führen. Einem etwaigen Klappern oder Schlagen des Bolzenelementes gegen die Berandung des Langloches ist dadurch entgegengewirkt. Denn durch die Stege und die daran geführte Führungsplatte ist es ermöglicht, das Bolzenelement in dem Langloch in einer vorgegebenen Position, beispielsweise in geringfügigem Abstand zu der Berandung des Langloches, zu halten und in dieser Position das Bolzenelement in dem Langloch in dessen Längsrichtung zu verschieben, indem entsprechend die Führungsplatte entlang der Stege verschoben wird.

Es kann vorgesehen sein, dass die Führungsplatte rechteckförmig ausgebildet ist und zwei Kurzseiten und zwei Langseiten umfasst, wobei der Abstand der Langseiten zueinander bemessen ist, um die Führungsplatte zwischen den Stegen zu führen, und die Länge der Längsseiten bemessen ist, um die Führungsplatte mit einer der Langseiten gegen ein längsseitiges Ende beider Stege in Anschlag zu bringen und damit das Bolzenelement im Bereich eines der längsseitigen Enden des Langloches zu fixieren. Dadurch kommt der Führungsplatte eine Doppelfunktion zu, welche sie je nach Ausrichtung ausüben kann. Die Führungsplatte kann gegenüber den Stegen eine Führungsfunktion ausüben, indem die Führungsplatte mit ihren Langseiten entlang der Längserstreckung der Stege geführt bewegt werden kann und damit die Bewegung des Bolzenelementes in dem Langloch in Längsrichtung unterstützt.

Darüber hinaus kann die Führungsplatte gegenüber den Stegen eine Feststellfunktion ausüben, indem nach Verdrehen der Führungsplatte um 90 Grad eine der Langseiten dem längsseitigen Ende der Stege zugewandt vorliegt, welche dann als Anschlag für die eine Langseite der Führungsplatte genutzt werden kann, um die Führungsplatte dagegen festzusetzen und damit auch das Bolzenelement in dem Langloch in einer entsprechenden Position zu halten. Diese Position des Bolzenelementes kann diejenige Position im Bereich des einen längsseitigen Endes des Langloches sein, welche mittels des Verriegelungselementes verriegelt wird. Insofern ist durch die Führungsplatte und das Verriegelungselement eine zweifache Sicherung zu erreichen. Auch kann die von der Führungsplatte ausgeübte Feststellfunktion das andere längsseitige Ende des Langloches betreffen.

Nach einer weiteren möglichen Ausführungsform ist es vorgesehen, dass der Lenker ein Unterlenker ist und eines der längsseitigen Enden des Langloches ein oberes Ende und das andere längsseitige Ende des Langloches ein darunter vorliegendes unteres Ende bilden. Es ist insbesondere vorgesehen, dass in der Verriegelungsposition das Bolzenelement in einem Bereich des oberen Endes des Langloches verriegelt ist. Durch das Verriegelungselement kann der Unterlenker in einer angehobenen Position festgesetzt werden, welche in dem oberen Ende des Langloches erreicht ist.

Nach einem weiteren Aspekt der Erfindung ist ein Dreipunkt-Kraftheber für einen Traktor oder eine sonstige landwirtschaftliche Arbeitsmaschine vorgesehen. Der Dreipunkt-Kraftheber umfasst wenigstens eine Anbindungsstelle zum Befestigen des Krafthebers an dem Traktor oder der sonstigen landwirtschaftlichen Arbeitsmaschine. Ferner umfasst der Dreipunkt-Kraftheber die vorstehend beschriebene Lenkeranordnung oder wenigstens eine Lenkeranordnung der vorstehend beschriebenen Art.

Bei dem Dreipunkt-Kraftheber ist es vorgesehen, dass der Lenker der wenigstens einen Lenkeranordnung ein Unterlenker ist und eingerichtet ist, relativ gegenüber dem Hubelement von einer Betriebsposition in eine Transportposition verlagert zu werden, wobei in der Transportposition das Bolzenelement in dem Bereich des oberen längsseitigen Endes des Langloches mittels des Verriegelungselementes gegen ein Bewegen in Richtung zu dem unten liegenden längsseitigen Ende des Langloches gesichert ist. Es ist insbesondere vorgesehen, dass in der Betriebsposition sich das Bolzenelement in dem Langloch unterhalb des oberen längsseitigen Endes des Langloches in einer schwimmenden Lagerung befindet, welche nach oben durch das Verriegelungselement und nach unten durch das untenliegende längsseitige Ende des Langloches begrenzt ist.

Nach einem nochmals weiteren Aspekt der Erfindung ist ein Traktor oder eine sonstige landwirtschaftliche Arbeitsmaschine vorgesehen, wobei der Traktor bzw. die landwirtschaftliche Arbeitsmaschine die vorstehend beschriebene Lenkeranordnung und/oder den vorstehend beschriebenen Dreipunkt-Kraftheber umfasst.

Weitere Einzelheiten und Merkmale der Erfindung ergeben sich aus der nachfolgenden Beschreibung wenigstens eines Ausführungsbeispiels anhand der Zeichnung.

Es zeigen:
- Fig. 1: eine mögliche Ausführungsform eines Dreipunkt-Krafthebers für einen Traktor oder eine sonstige landwirtschaftliche Arbeitsmaschine in einer schematisierten Darstellung,
- Fig. 2: eine mögliche Ausführungsform einer Lenkeranordnung mit einem Lenker und einem damit verbundenen Hubelement als Ausschnitt aus einem Bereich eines in einem Langloch geführten Bolzenelementes in einer Seitenansicht, wobei sich das Bolzenelement in einer Transportposition befindet,
- Fig. 3: die Lenkeranordnung der Figur 2 in einer anderen Seitenansicht,
- Fig. 4: die Lenkeranordnung der Figur 2 in einer perspektivischen Darstellung,
- Fig. 5: die Lenkeranordnung der Figur 2 in der Seitenansicht der Figur 2, wobei sich das Bolzenelement in einer schwimmenden Betriebsposition befindet,
- Fig. 6: die Lenkeranordnung der Figur 5 in einer anderen Seitenansicht,
- Fig. 7: die Lenkeranordnung der Figur 2 in der Seitenansicht der Figur 2, wobei sich das Bolzenelement in einer arretierten Betriebsposition befindet,
- Fig. 8: die Lenkeranordnung der Figur 7 in einer anderen Seitenansicht und
- Fig. 9: die Lenkeranordnung der Figur 7 in einer perspektivischen Darstellung.

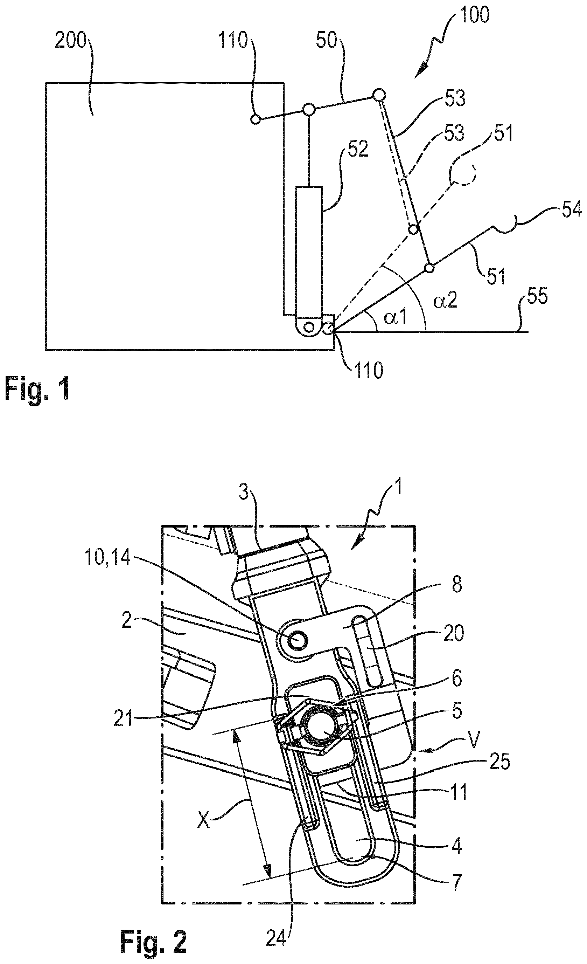

Figur 1 zeigt - in einer schematischen Darstellung - eine mögliche Ausführungsform eines Dreipunkt-Krafthebers 100 als Seitenansicht. In der Figur 1 ist angedeutet, dass der Dreipunkt-Kraftheber 100 an einer landwirtschaftlichen Arbeitsmaschine, wie beispielsweise einem Traktor 200, montiert sein kann. Der Dreipunkt-Kraftheber 100 ist beispielsweise eine hydraulische Hubvorrichtung und dient zum Ankuppeln und/oder Anheben eines (in der Figur nicht dargestellten) Anbaugerätes.

Der Dreipunkt-Kraftheber 100 umfasst zwei Unterlenker, von denen in der Seitenansicht der Figur 1 nur ein Unterlenker 51 sichtbar ist. Insofern wird nachfolgend auf den einen Unterlenker 51 Bezug genommen, auch wenn gegebenenfalls beide Unterlenker gemeint sind. Die Unterlenker 51 sind einerseits über eine Anbindungsstelle 110 an dem Traktor 200 angelenkt und andererseits mit einem Fanghaken 54 versehen, um daran das Anbaugerät anhängen zu können. Beispielsweise sind die Unterlenker 51 jeweils über ein Hebelsystem mit einem Hubzylinder 52, wie beispielsweise einen Hydraulikzylinder verbunden, über welchen das angehängte Anbaugerät angehoben werden kann. Dazu kann es vorgesehen sein, dass der Hubzylinder 52 mit einem Ende an dem Traktor 200 angelenkt ist und mit einem anderen Ende an einem Oberlenker 50 angelegt ist. Der Oberlenker 50 ist einerseits über eine weitere Anbindungsstelle 110 ebenfalls an dem Traktor 200 angelengt und andererseits jeweils über eine Hubstange 53 mit einem der Unterlenker 51 drehbar verbunden.

In der Figur 1 sind beispielshaft die Unterlenker 51 gegenüber einer horizontalen Ebene 55 in einem Winkel α1 schräg verlaufend dargestellt. Diese Stellung der Unterlenker 51 ist beispielsweise eine typische Betriebsstellung, in der sich die Unterlenker 51 befinden, wenn ein Anbaugerät aufgenommen ist und auf eine vorgegebene Höhe angehoben wurde. Wie dort beispielhaft gezeigt ist, können die Unterlenker 51 in eine weiter angehobene Position gebracht werden, in der die Unterlenker 51 gegenüber der horizontalen Ebene 55 in einem Winkel α2 schräg verlaufend sind (Unterlenker 51 und Hubstange 53 gestrichelt gezeichnet). Diese angehobene Position bietet sich beispielsweise als Transportportposition an, in welche die Unterlenker 51 gebracht werden können, wenn kein Anbaugerät an dem Dreipunkt-Kraftheber 100 angehängt. Die Unterlenker 51 sind dort soweit eingehoben, dass ein Anhänger an der Anhängerkupplung des Traktors 200 angehängt sein kann, ohne dass, beispielsweise bei einer Kurvenfahrt, die Deichsel des Anhängers mit den Unterlenkern 51 in Konflikt gelangt. Die angehobene Position kann grundsätzlich erreicht werden, wenn die Länge der Hubstange 53 verkürzt wird. Eine andere Möglichkeit wird in den folgenden Figuren vorgestellt.

Figur 2 zeigt eine mögliche Ausführungsform einer Lenkeranordnung 1 für einen Dreipunkt-Kraftheber, wie beispielsweise den Dreipunkt-Kraftheber 100 der Figur 1, in einer Seitenansicht. Die Lenkeranordnung 1 umfasst einen Lenker 2 und ein Hubelement 3, wie beispielsweise eine Hubstange. Der Lenker 2 ist über ein in einem Langloch 4 geführtes Bolzenelement 5 mit dem Hubelement 3 bewegbar verbunden. Bevorzugt ist das Bolzenelement 5 in dem Langloch 4 entlang eines Verschiebeweges X bewegbar geführt. Durch das Langloch 4 und das darin aufgenommene Bolzenelement 5 ist ein Anheben des Lenkers 2 relativ gegenüber dem Hubelement 3 möglich, ohne dass dazu die Länge des Hubelementes 3 verändert werden braucht. Dies ist durch das Langloch 4 erreicht, entlang dessen Längserstreckung das Bolzenelement 5 bewegt werden kann, um den Lenker 2 relativ gegenüber dem Hubelement 3 anzuheben. Dieser Ansatz kann auch bei dem Dreipunkt-Kraftheber 100 der Figur 1 übernommen und die Lenkeranordnung 1 bei dem Dreipunkt-Kraftheber 100 der Figur 1 realisiert sein. Beispielsweise bilden dann der Lenker 2 den Unterlenker 51 des Dreipunkt-Krafthebers 100 und das Hubelement 3 die Hubstange 53 des Dreipunkt-Krafthebers 100.

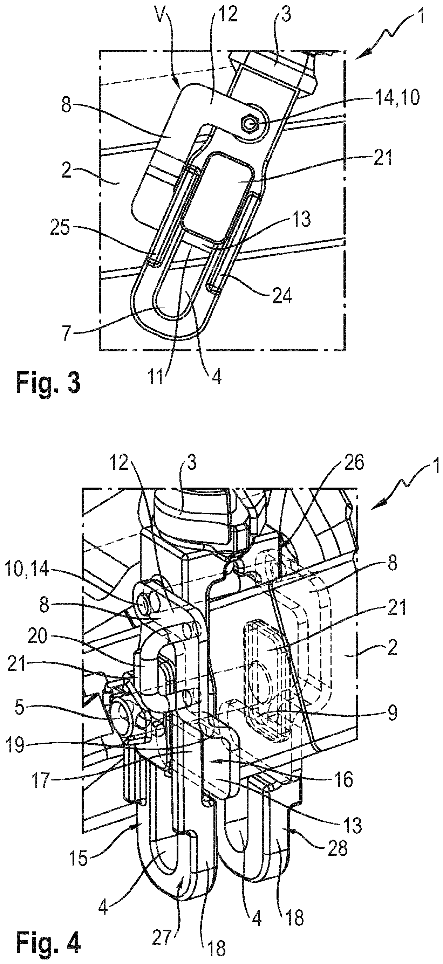

Die Lenkeranordnung 1 umfasst ein Verriegelungselement 8, welches eingerichtet ist, von einer Verriegelungsposition V, wie sie in der Figur 2 gezeigt ist, in eine (in der Figur 2 nicht dargestellte) Entriegelungsposition gebracht zu werden. In der Verriegelungsposition V greift das Verriegelungselement 8 in den Verschiebeweg X ein und bildet einen Anschlag 9 (Figur 4) für das Bolzenelement 5, um das Bolzenelement 5 in einem Bereich eines der zwei längsseitigen Enden 6, 7 des Langloches 4 gegen ein Bewegen in Richtung zu dem anderen längsseitigen Ende 7 des Langloches 4 zu sichern.

Die Figur 2 und Figuren 3 und 4 zeigen die Lenkeranordnung 1 in unterschiedlichen Ansichten, wobei sich das Verriegelungselement 8 in der Verriegelungsposition V befindet und das Bolzenelement 5 in den Bereich des einen längsseitigen Endes 6 des Langloches 4 gesichert ist, indem das Bolzenelement 5 durch den Anschlag 9 des Verriegelungselementes 8 gegen ein Bewegen in Richtung zu dem anderen längsseitigen Ende 7 des Langloches 4 gesperrt ist. Durch die dort von den Bolzenelement 5 eingenommene Position befindet sich der Lenker 2 gegenüber dem Hubelement 3 in einer festgesetzten Position, welche eine Transportposition sein kann. Sofern es sich bei dem Lenker 2 um einen Unterlenker handelt und das eine längsseitige Ende 6 des Langloches 4 ein oberes Ende bildet, befindet sich in dieser festgesetzten Position der Lenker 2 in einer angehobenen Position oder in der bereits vorstehend beschriebenen angehobenen Position, in welcher sich der Lenker 2 außerhalb eines Kollisionsbereiches befindet.

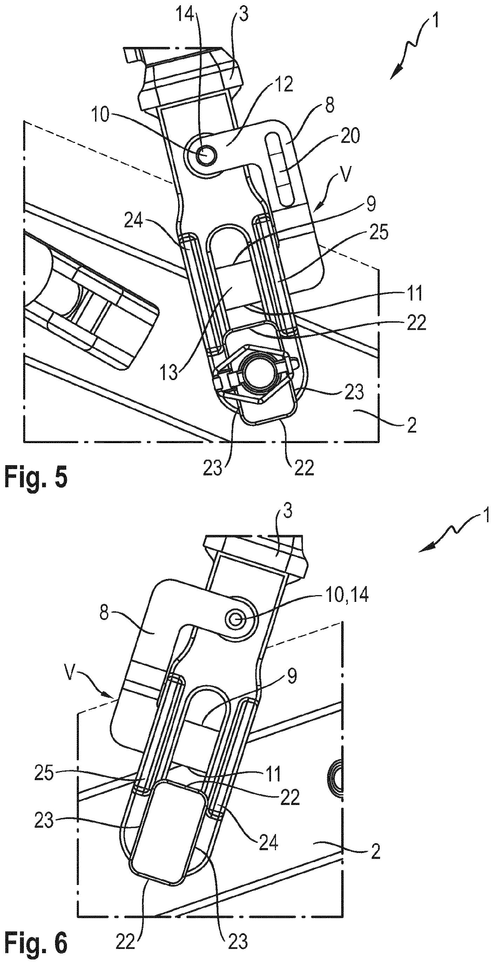

Bevorzugt bildet in der Verriegelungsposition V das Verriegelungselement 8 einen weiteren Anschlag 11 (Figur 2), welcher in einem Abstand zu dem anderen längsseitigen Ende 7 des Langloches 4 vorliegt, um das Bolzenelement 5 zwischen dem weiteren Anschlag 11 und dem anderen längsseitigen Ende 7 des Langloches 4 schwimmend zu lagern. Figuren 5 und 6 zeigen die Lenkeranordnung 1 in unterschiedlichen Seitenansichten, wobei das Verriegelungselement 8 in der Verriegelungsposition V vorliegt und das Bolzenelement 5 sich in der schwimmenden Lagerung befindet. In der schwimmenden Lagerung ist das Bolzenelement 5 zwischen dem anderen längsseitigen Ende 7 und dem weiteren Anschlag 11, welcher durch das Verriegelungselement 8 gebildet ist innerhalb des Langloches 4 in dessen Längserstreckung hin und her verschiebbar und demensprechend der Lenker 2 relativ gegenüber dem Hubelement 3 hin und her bewegbar. Die schwimmende Lagerung kann eine Betriebsposition definieren, in der der Lenker 2 gegenüber dem Hubelement 3 beispielsweise bei dem Dreipunkt-Kraftheber 100 der Figur 1 vorliegen kann.

Um das Bolzenelement 5 von dem Bereich der schwimmenden Lagerung in den Bereich des einen längsseitigen Endes 6 des Langloches 4 oder umgekehrt zu bringen, ist das Verriegelungselement 8 aus der Verriegelungsposition V herauszubringen, insbesondere in die Entriegelungsposition zu bringen. In der Entriegelungsposition gibt das Verriegelungselement 8 den Verschiebeweg X frei. Es kann ein Griffteil 20 vorgesehen sein, um daran das Verriegelungselement 8 in die Verriegelungsposition V oder die Entriegelungsposition händisch zu bringen. Beispielsweise ist das Verriegelungselement 8 um eine Drehachse 10 schwenkbar gelagert, so dass das Verriegelungselement 8 durch eine Schwenkbewegung um die Drehachse 10 in die die Entriegelungsposition oder die Verriegelungsposition V gebracht wird.

Wie insbesondere aus den Figuren 1 bis 6 ersichtlich ist, kann das Verriegelungselement 8 hakenförmig und/oder u-förmig ausgebildet sein und einen ersten Schenkel 12 und einen zweiten Schenkel 13 umfassen. Beispielsweise weist der erste Schenkel 12 eine Drehstelle 14 auf, über welche das Verriegelungselement 8 um die Drehachse 10 schwenkbar gelagert ist. An dem zweiten Schenkel 13 kann der Anschlag 9 und/oder der weitere Anschlag 11 für das Bolzenelement 5 gebildet sein. Bevorzugt ist der erste Schenkel 12 über die Drehstelle 14 an einer Vorderseite 15 eines das Langloch 4 aufweisenden Materialabschnittes 18 befestigt und der zweite Schenkel 13 ist gegenüber dem ersten Schenkel 12 in Richtung der Drehachse 10 versetzt angeordnet, so dass in der Verriegelungsposition V der zweite Schenkel 13 entlang einer Rückseite 16 des Materialabschnittes 18 vorliegt, wie beispielsweise aus der Figur 4 ersichtlich ist. Eine zwischen der Vorderseite 15 und der Rückseite 16 vorgesehene Stirnseite 17 des Materialabschnittes 18 dient dann beispielsweise als Begrenzungsfläche, gegen welche das Verriegelungselement 8 mit einem zwischen dem ersten Schenkel 12 und dem zweiten Schenkel 13 angeordneten Zwischenabschnitt 19 in Kontakt tritt, um die Schwenkbewegung des Verriegelungselementes 8 zu begrenzen.

Bevorzugt ist das Langloch 4 dem Hubelement 3 zugeordnet und bevorzugt ist das Bolzenelement 5 dem Lenker 2 zugeordnet. Bevorzugt ist das Verriegelungselement 8 an dem Hubelement 3 bewegbar gelagert. Beispielsweise umfasst das Hubelement 3 an einem Ende einen Gabelkopf 26 mit zwei zueinander beabstandeten seitlichen Gabelschenkeln 27, 28, zwischen den der Lenker 2 aufgenommen ist (Figur 4). Bevorzugt ist an dem jeweiligen Gabelschenkel 27 bzw. 28 das Langloch 4 ausgebildet und das Bolzenelement 5 durchgreift die Gabelschenkel 27, 28 und den Lenker 2.

Bevorzugt ist das Bolzenelement 5 endseitig mit jeweils einer Führungsplatte 21 versehen und an der Berandung des Langloches 4 entlang seiner jeweiligen Längsseite jeweils ein Steg 24 bzw. 25 vorgesehen, um daran an einer Bewegung des Bolzenelementes 5 entlang des Langloches 4 die Führungsplatte 21 zu führen. Die Führungsplatte 21 kann rechteckförmig ausgebildet sein und zwei Kurzseiten 22 und zwei Langseiten 23 umfassen. Bevorzugt ist der Abstand der Langseiten 23 zueinander derart bemessen, dass die Führungsplatte 21 zwischen den Stegen 24, 25 geführt werden kann. Die Figuren 5 und 6 zeigen beispielhaft die Situation, in der die Führungsplatte 21 zwischen den Stegen 24, 25 geführt ist. Die Führungsplatte 21 ist dort im Zuge der schwimmenden Lagerung des Bolzenelementes 5 in dem Langloch 4 an den Stegen 24, 25 geführt, wenn sich das Bolzenelement 5 entlang der Längserstreckung des Langloches 4 bewegt.

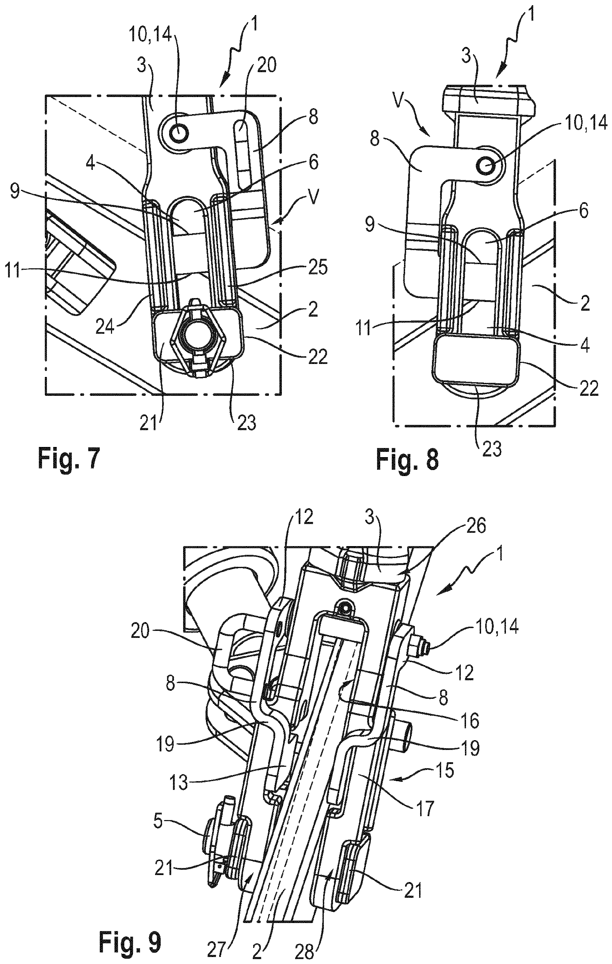

Bevorzugt ist die Länge der Langseiten 23 derart bemessen, dass die Führungsplatte 21 mit einer der Langseiten 23 gegen ein längsseitiges Ende der beiden Stege 24, 25 in Anschlag gebracht werden kann und damit das Bolzenelement 5 im Bereich des anderen längsseitigen Endes 7 des Langloches 4 fixiert ist. Durch die Führungsplatte 21 und die Stege 24, 25 kann auf diese Weise eine Arretierung gebildet sein, beispielsweise um das Bolzenelement 5 in einer vorgegebenen Position in dem Langloch 4 festzusetzen. Figuren 7 bis 9 zeigen die Lenkeranordnung in unterschiedlichen Ansichten, wobei dort beispielhaft das Bolzenelement 5 im Bereich des anderen längsseitigen Endes 7 des Langloches 4 mittels der Führungsplatte 21 und den Stegen 24, 25 festgesetzt ist. Dazu ist die Führungsplatte 21 gegenüber seiner Ausrichtung in den Figuren 5 und 6 um 90 Grad gedreht worden, so dass die Führungsplatte 21 nunmehr in Anlage gegen die Enden der beiden Stege 24, 25 vorliegt.

Die Verwendung von einzelnen oder allen Beispielen oder einer beispielhaften Ausdrucksweise im Text soll lediglich die Erfindung beleuchten und stellt keine Beschränkung hinsichtlich des Umfangs der Erfindung dar, wenn nichts anders behauptet wird.

### Bezugszeichenliste

- 1: Lenkeranordnung
- 2: Lenker
- 3: Hubelement
- 4: Langloch
- 5: Bolzenelement
- 6: Ende
- 7: Ende
- 8: Verriegelungselement
- 9: Anschlag
- 10: Drehachse
- 11: weiterer Anschlag
- 12: erster Schenkel
- 13: zweiter Schenkel
- 14: Drehstelle
- 15: Vorderseite
- 16: Rückseite
- 17: Stirnseite
- 18: Materialabschnitt
- 19: Zwischenabschnitt
- 20: Griffteil
- 21: Führungsplatte
- 22: Kurzseite
- 23: Langseite
- 24: Steg
- 25: Steg
- 26: Gabelkopf
- 27: Gabelschenkel
- 28: Gabelschenkel

- 50: Oberlenker
- 51: Unterlenker
- 52: Hubzylinder
- 53: Hubstange
- 54: Fanghaken
- 55: horizontale Ebene

- 100: Dreipunkt-Kraftheber
- 110: Anbindungsstelle

- 200: Traktor

- V: Verriegelungsposition
- X: Verschiebeweg

- α1: Winkel
- α2: Winkel

## Patentansprüche

1. Lenkeranordnung (1) für einen Dreipunkt-Kraftheber (100) eines Traktors (200) oder einer sonstigen landwirtschaftlichen Arbeitsmaschine, die Lenkeranordnung (1) umfassend einen Lenker (2) und ein längliches Hubelement (3), wobei der Lenker (2) über ein in einem Langloch (4) entlang eines Verschiebeweges geführtes Bolzenelement (5) mit dem Hubelement (3) verbunden ist, wobei ein Verriegelungselement (8) vorgesehen ist, welches eingerichtet ist, von einer Verriegelungsposition (V) in eine Entriegelungsposition gebracht zu werden, wobei in der Verriegelungsposition (V) das Verriegelungselement (8) in den Verschiebeweg eingreift und einen Anschlag (9) für das Bolzenelement (5) bildet, um das Bolzenelement (5) in einem Bereich eines der zwei längsseitigen Enden (6, 7) des Langloches (4) gegen ein Bewegen in Richtung zu dem anderen längsseitigen Ende (7) des Langloches (4) zu sichern, **dadurch gekennzeichnet, dass** das Verriegelungselement (8) um eine Drehachse (10) schwenkbar gelagert ist und eingerichtet ist, durch eine Schwenkbewegung um die Drehachse (10) in die Verriegelungsposition (V) oder die Entriegelungsposition gebracht zu werden, wobei das Verriegelungselement (8) hakenförmig und/oder U-förmig ausgebildet ist.

2. Lenkeranordnung nach Anspruch 1, **dadurch gekennzeichnet, dass** das Verriegelungselement (8) eingerichtet ist, in der Entriegelungsposition den Verschiebeweg freizugeben, um das Bolzenelement (5) in den Bereich des einen längsseitigen Endes (6) des Langloches (4) zu bewegen.

3. Lenkeranordnung nach Anspruch 1 oder 2, **dadurch gekennzeichnet, dass** das Verriegelungselement (8) eingerichtet ist, in der Verriegelungsposition (V) einen weiteren Anschlag (11) zu bilden, welcher in einem Abstand zu dem anderen längsseitigen Ende (7) des Langloches (4) vorliegt, um das Bolzenelement (5) zwischen dem weiteren Anschlag (11) und dem anderen längsseitigen Ende (7) des Langloches (4) schwimmend zu lagern.

4. Lenkeranordnung nach einem der vorangehenden Ansprüche, **dadurch gekennzeichnet, dass** ein erster Schenkel (12) des Verriegelungselementes (8) eine Drehstelle (14) aufweist, über welche das Verriegelungselement (8) um die Drehachse (10) schwenkbar gelagert ist, und ein zweiter Schenkel (13) des Verriegelungselementes (8) den Anschlag (9) für das Bolzenelement (5) bildet.

5. Lenkeranordnung nach Anspruch 4, **dadurch gekennzeichnet, dass** der erste Schenkel (12) über die Drehstelle (14) an einer Vorderseite (15) eines das Langloch (4) aufweisenden Materialabschnittes (18) befestigt ist und der zweite Schenkel (13) gegenüber dem ersten Schenkel (12) in Richtung der Drehachse (10) versetzt angeordnet ist, so dass in der Verriegelungsposition (V) der zweite Schenkel (13) entlang einer Rückseite (16) des Materialabschnittes (18) vorliegt und eine zwischen der Vorderseite (15) und der Rückseite (16) vorgesehene Stirnseite (17) des Materialabschnittes (18) als Begrenzungsfläche dient, gegen welche das Verriegelungselement (8) mit einem zwischen dem ersten Schenkel (12) und dem zweiten Schenkel (13) angeordneten Zwischenabschnitt (19) in Kontakt tritt, um die Schwenkbewegung des Verriegelungselementes (8) zu begrenzen.

6. Lenkeranordnung nach einem der vorhergehenden Ansprüche, **dadurch gekennzeichnet, dass** das Verriegelungselement (8) ein Griffteil (20) umfasst, um daran das Verriegelungselement (8) in die Verriegelungsposition (V) oder die Entriegelungsposition händisch zu bringen.

7. Lenkeranordnung nach einem der vorhergehenden Ansprüche, **dadurch gekennzeichnet, dass** das Langloch (4) dem Hubelement (3) und das Bolzenelement (5) dem Lenker (2) zugeordnet sind und das Verriegelungselement (8) an dem Hubelement (3) gelagert ist.

8. Lenkeranordnung nach Anspruch 7, **dadurch gekennzeichnet, dass** das Hubelement (3) an einem Ende einen Gabelkopf (26) mit zwei zueinander beabstandeten seitlichen Gabelschenkeln (27, 28) aufweist, zwischen denen der Lenker (2) aufgenommen ist, wobei an dem jeweiligen Gabelschenkel (27; 28) jeweils das Langloch (4) ausgebildet ist und das Bolzenelement (5) die Gabelschenkel (27, 28) und den Lenker (2) durchgreift.

9. Lenkeranordnung nach einem der vorhergehenden Ansprüche, **dadurch gekennzeichnet, dass** das Bolzenelement (5) endseitig mit einer Führungsplatte (21) versehen ist und an der Berandung des Langloches (4) entlang seiner jeweiligen Längsseite ein Steg (24; 25) vorgesehen ist, um daran bei einer Bewegung des Bolzenelementes (5) entlang des Langloches (4) die Führungsplatte (21) zu führen.

10. Lenkeranordnung nach Anspruch 9, **dadurch gekennzeichnet, dass** die Führungsplatte (21) rechteckförmig ausgebildet ist und zwei Kurzseiten (22) und zwei Langseiten (23) umfasst, wobei der Abstand der Langseiten (23) zueinander bemessen ist, um die Führungsplatte (21) zwischen den Stegen (24, 25) zu führen, und die Länge der Langseiten (23) bemessen ist, um die Führungsplatte (21) mit einer der Langseiten (23) gegen ein längsseitiges Ende beider Stege (24, 25) in Anschlag zu bringen und damit das Bolzenelement (5) im Bereich eines der längsseitigen Enden (6, 7) des Langloches (4) zu fixieren.

11. Lenkeranordnung nach einem der vorhergehenden Ansprüche, **dadurch gekennzeichnet, dass** der Lenker (2) ein Unterlenker (51) ist und das eine längsseitige Ende (6) des Langloches (4) ein oberes Ende und das andere längsseitige Ende (7) ein darunter vorliegendes unteres Ende bilden, wobei in der Verriegelungsposition (V) das Bolzenelement (5) in einem Bereich des oberen Endes des Langloches (4) verriegelt ist.

12. Dreipunkt-Kraftheber (100) für einen Traktor (200) oder eine sonstige landwirtschaftliche Arbeitsmaschine, der Dreipunkt-Kraftheber (100) umfassend wenigstens eine Anbindungsstelle (110) zum Befestigen des Krafthebers (100) an dem Traktor (200) oder der sonstigen landwirtschaftlichen Arbeitsmaschine und ferner umfassend wenigstens eine Lenkeranordnung (1) nach einem der vorhergehenden Ansprüche.

13. Dreipunkt-Kraftheber nach Anspruch 12, **dadurch gekennzeichnet, dass** der Lenker (2) der wenigstens einen Lenkeranordnung (1) ein Unterlenker (51) ist und eingerichtet ist, relativ gegenüber dem Hubelement (3) von einer Betriebsposition in eine Transportposition verlagert zu werden, wobei in der Transportposition das Bolzenelement (5) in dem Bereich des oberen längsseitigen Endes (6) des Langloches (4) mittels des Verriegelungselementes (8) gegen ein Bewegen in Richtung zu dem unten liegenden längsseitigen Ende (7) des Langloches (4) gesichert ist und wobei in der Betriebsposition sich das Bolzenelement (5) in dem Langloch (4) in einer schwimmenden Lagerung befindet, welche nach oben durch das Verriegelungselement (8) und nach unten durch das unten liegende längsseitige Ende (7) des Langloches (4) begrenzt ist.

14. Traktor (200) oder sonstige landwirtschaftliche Arbeitsmaschine mit einer Lenkeranordnung (1) nach einem der Ansprüche 1 bis 11 und/oder mit einem Dreipunkt-Kraftheber (100) nach Anspruch 12 oder 13.

## Claims

1. A lift arm assembly (1) for a three point power lift (100) of a tractor (200) or another agricultural working machine, the lift arm assembly (1) comprising a lift arm (2) and an elongate lifting element (3), wherein the lift arm (2) is connected to the lifting element (3) via a bolt element (5) guided along a displacement path in an elongated aperture (4), wherein a latching element (8) is provided which is configured to be brought from a latching position (V) into an unlatching position, wherein in the latching position (V), the latching element (8) encroaches into the displacement path and forms an abutment (9) for the bolt element (5) in order to secure the bolt element (5) in a region of one of the two lengthwise ends (6, 7) of the elongated aperture (4) against a movement in the direction towards the other lengthwise end (7) of the elongated aperture (4), **characterized in that** the latching element (8) is pivotably mounted about an axis of rotation (10) and is configured to be brought into the latching position (V) or the unlatching position by a pivoting movement about the axis of rotation (10), wherein the latching element (8) is hook-shaped and/or U-shaped in configuration.

2. The lift arm assembly according to claim 1, **characterized in that** the latching element (8) is configured to unblock the displacement path in the unlatching position in order to move the bolt element (5) into the region of one lengthwise end (6) of the elongated aperture (4).

3. The lift arm assembly according to claim 1 or claim 2, **characterized in that** the latching element (8) is configured to form a further abutment (11) in the latching position (V) which is at a distance from the other lengthwise end (7) of the elongated aperture (4) in order to float-mount the bolt element (5) between the further abutment (11) and the other lengthwise end (7) of the elongated aperture (4).

4. The lift arm assembly according to one of the preceding claims, **characterized in that** a first limb (12) of the latching element (8) has a pivot point (14) via which the latching element (8) is pivotably mounted about the axis of rotation (10), and a second limb (13) of the latching element (8) forms the abutment (9) for the bolt element (5).

5. The lift arm assembly according to claim 4, **characterized in that** the first limb (12) is secured via the pivot point (14) to a front side (15) of a section of the structure (18) having the elongated aperture (4) and the second limb (13) is offset with respect to the first limb (12) in the direction of the axis of rotation (10), so that in the latching position (V), the second limb (13) lies along a rear side (16) of the section of the structure (18) and an end face (17) of the section of the structure (18) provided between the front side (15) and the rear side (16) acts as a boundary surface against which the latching element (8) comes into contact with an intermediate section (19) disposed between the first limb (12) and the second limb (13), in order to limit the pivotal movement of the latching element (8).

6. The lift arm assembly according to one of the preceding claims, **characterized in that** the latching element (8) comprises a handle portion (20) for manually bringing the latching element (8) into the latching position (V) or the unlatching position.

7. The lift arm assembly according to one of the preceding claims, **characterized in that** the elongated aperture (4) is associated with the lifting element (3) and the bolt element (5) is associated with the lift arm (2) and the latching element (8) is mounted on the lifting element (3).

8. The lift arm assembly according to claim 7, **characterized in that** one end of the lifting element (3) has a fork head (26) with two lateral fork limbs (27, 28) which are separated from each other, between which the lift arm (2) is received, wherein each fork limb (27; 28) has a respective elongated aperture (4) formed thereon and the bolt element (5) passes through the fork limbs (27, 28) and the lift arm (2).

9. The lift arm assembly according to one of the preceding claims, **characterized in that** an end of the bolt element (5) is provided with a guide plate (21) and at the boundary of the elongated aperture (4) along its respective long side, a fillet (24, 25) is provided in order to guide the guide plate (21) upon it along the elongated aperture (4) in the case of a movement of the bolt element (5).

10. The lift arm assembly according to claim 9, **characterized in that** the guide plate (21) is rectangular in shape and comprises two short sides (22) and two long sides (23), wherein the separation of the long sides (23) with respect to each other is dimensioned such that the guide plate (21) is guided between the fillets (24, 25), and the length of the long sides (23) is dimensioned such that the guide plate (21) is brought into abutment with one of the long sides (23) against a lengthwise end of both fillets (24, 25) and in this manner, the bolt element (5) is fixed in the region of one of the lengthwise ends (6, 7) of the elongated aperture (4).

11. The lift arm assembly according to one of the preceding claims, **characterized in that** the lift arm (2) is a lower link (51) and **in that** one lengthwise end (6) of the elongated aperture (4) forms an upper end and the other lengthwise end (7) forms a lower end which is beneath it, wherein in the latching position (V), the bolt element (5) is latched in a region of the upper end of the elongated aperture (4).

12. A three point power lift (100) for a tractor (200) or another agricultural working machine, the three point power lift (100) comprising at least one attachment point (110) for securing the power lift (100) to the tractor (200) or the other agricultural working machine and further comprising at least one lift arm assembly (1) according to one of the preceding claims.

13. The three point power lift according to claim 12, **characterized in that** the lift arm (2) of the at least one lift arm assembly (1) is a lower link (51) and is configured to be displaced relative to the lifting element (3) from an operating position into a transport position, wherein in the transport position, the bolt element (5) is secured in the region of the upper lengthwise end (6) of the elongated aperture (4) by means of the latching element (8) against a movement in the direction towards the lower lengthwise end (7) of the elongated aperture (4), and wherein in the operating position, the bolt element (5) is float-mounted in the elongated aperture (4) which is bounded at the top by the latching element (8) and bounded at the bottom by the lower lengthwise end (7) of the elongated aperture (4).

14. A tractor (200) or another agricultural working machine, with a lift arm assembly (1) according to one of claims 1 to 11 and/or with a three point power lift (100) according to claim 12 or claim 13.

## Revendications

1. Agencement de bras (1) pour un relevage à trois points (100) d'un tracteur (200) ou d'une autre machine de travail agricole, l'agencement de bras (1) incluant un bras (2) et un élément de levage allongé (3), le bras (2) étant relié à l'élément de levage (3) par l'intermédiaire d'un élément de goujon (5) guidé le long d'un trajet de déplacement dans un trou oblong (4), un élément de verrouillage (8) étant prévu, lequel est agencé pour être amené d'une position de verrouillage (V) vers une position de déverrouillage, dans la position de verrouillage (V) l'élément de verrouillage (8) pénétrant dans le trajet de déplacement et formant une butée (9) pour l'élément de goujon (5) afin d'empêcher l'élément de goujon (5) de se déplacer, dans une zone d'une des deux extrémités longitudinales (6, 7) du trou oblong (4), en direction de l'autre extrémité longitudinale (7) du trou oblong (4), **caractérisé en ce que** l'élément de verrouillage (8) est monté pivotant autour d'un axe de rotation (10) et est agencé pour être amené dans la position de verrouillage (V) ou la position de déverrouillage par un mouvement pivotant autour de l'axe de rotation (10), l'élément de verrouillage (8) étant conçu en forme de crochet et/ou en forme de U.

2. Agencement de bras selon la revendication 1, **caractérisé en ce que** l'élément de verrouillage (8) est agencé pour libérer le trajet de déplacement dans la position de déverrouillage afin d'amener l'élément de goujon (5) dans la zone de l'une des extrémités longitudinales (6) du trou oblong (4).

3. Agencement de bras selon la revendication 1 ou 2, **caractérisé en ce que** l'élément de verrouillage (8) est agencé pour former dans la position de verrouillage (V) une autre butée (11), laquelle se trouve à distance de l'autre extrémité longitudinale (7) du trou oblong (4), afin de disposer l'élément de goujon (5) de façon flottante entre l'autre butée (11) et l'autre extrémité longitudinale (7) du trou oblong (4).

4. Agencement de bras selon une des revendications précédentes, **caractérisé en ce qu'**une première branche (12) de l'élément de verrouillage (8) comporte un point de rotation (14) par l'intermédiaire duquel l'élément de verrouillage (8) est monté pivotant autour de l'axe de rotation (10), et une seconde branche (13) de l'élément de verrouillage (8) forme la butée (9) pour l'élément de goujon (5).

5. Agencement de bras selon la revendication 4, **caractérisé en ce que** la première branche (12) est fixée par l'intermédiaire du point de rotation (14) à un côté avant (15) d'une portion de matière (18) pourvue du trou oblong (4), et la seconde branche (13) est disposé de façon décalée en direction de l'axe de rotation (10) par rapport à la première branche (12), de sorte que, dans la position de verrouillage (V), la seconde branche (13) se trouve le long d'un côté arrière (16) de la portion de matière (18) et qu'un côté frontal (17) de la portion de matière (18) prévue entre le côté avant (15) et le côté arrière (16) sert de surface de limitation contre laquelle l'élément de verrouillage (8) vient en contact avec une portion intermédiaire (19) disposée entre la première branche (12) et la seconde branche (13) afin de limiter le mouvement pivotant de l'élément de verrouillage (8).

6. Agencement de bras selon une des revendications précédentes, **caractérisé en ce que** l'élément de verrouillage (8) inclut une partie de préhension (20) afin d'amener manuellement l'élément de verrouillage (8) dans la position de verrouillage (V) ou dans la position de déverrouillage.

7. Agencement de bras selon une des revendications précédentes, **caractérisé en ce que** le trou oblong (4) est associé à l'élément de levage (3), et l'élément de goujon (5) au bras (2), et l'élément de verrouillage (8) est monté sur l'élément de levage (3).

8. Agencement de bras selon la revendication 7, **caractérisé en ce que** l'élément de levage (3) comporte à une extrémité une chape (26) avec deux branches de chape distantes latéralement l'une de l'autre (27, 28), entre lesquelles est logé le bras (2), dans la branche de chape respective (27 ; 28) étant ménagé respectivement le trou oblong (4), et l'élément de goujon (5) traversant les branches de chape (27, 28) et le bras (2).

9. Agencement de bras selon une des revendications précédentes, **caractérisé en ce que** l'élément de goujon (5) est muni à ses extrémités d'une plaque de guidage (21), et un rebord (24 ; 25) est prévu sur le bord du trou oblong (4) le long de son côté longitudinal respectif (24 ; 25) afin de guider la plaque de guidage (21) contre celui-ci lors d'un déplacement de l'élément de goujon (5) le long du trou oblong (4).

10. Agencement de bras selon la revendication 9, **caractérisé en ce que** la plaque de guidage (21) est conçue de forme rectangulaire et inclut deux petits côtés (22) et deux grands côtés (23), l'écartement des grands côtés (23) l'un par rapport à l'autre étant dimensionné pour guider la plaque de guidage (21) entre les rebords (24, 25), et la longueur des grands côtés (23) étant dimensionnée pour amener la plaque de guidage (21), par un des grands côtés (23), en butée contre une extrémité longitudinale des deux rebords (24, 25) et immobiliser ainsi l'élément de goujon (5) dans la zone d'une des extrémités longitudinales (6, 7) du trou oblong (4).

11. Agencement de bras selon une des revendications précédentes, **caractérisé en ce que** le bras (2) est un bras inférieur (51), et l'une des extrémités longitudinales (6) du trou oblong (4) forme une extrémité supérieure, et l'autre extrémité longitudinale (7) forme une extrémité inférieure située dessous, dans la position de verrouillage (V) l'élément de goujon (5) étant verrouillé dans une zone de l'extrémité supérieure du trou oblong (4).

12. Relevage à trois points (100) pour un tracteur (200) ou pour une autre machine de travail agricole, le relevage à trois points (100) incluant au moins un point de raccordement (110) pour fixer le relevage (100) au tracteur (200) ou à l'autre machine de travail agricole et incluant en outre au moins un agencement de bras (1) selon une des revendications précédentes.

13. Relevage à trois points selon la revendication 12, **caractérisé en ce que** le bras (2) du au moins un agencement de bras (1) est un bras inférieur (51) et est agencé pour être déplacé, relativement à l'élément de levage (3), depuis une position de fonctionnement vers une position de transport, dans la position de transport l'élément de goujon (5), dans la zone de l'extrémité longitudinale supérieure (6) du trou oblong (4), étant empêché au moyen de l'élément de verrouillage (8) de se déplacer en direction de l'extrémité longitudinale (7) du trou oblong (4) située en bas, et dans la position de fonctionnement l'élément de goujon (5) se trouvant dans le trou oblong (4) dans une disposition flottante qui est limitée vers le haut par l'élément de verrouillage (8) et vers le bas par l'extrémité longitudinale (7) du trou oblong (4) située en bas.

14. Tracteur (200) ou autre machine de travail agricole comprenant un agencement de bras (1) selon une des revendications 1 à 11 et/ou comprenant un relevage à trois points (100) selon la revendication 12 ou 13.
